# EUROPÄISCHE PATENTSCHRIFT

(11) **EP 1 339 919 B1**
(45) Veröffentlichungstag und Bekanntmachung des Hinweises auf die Patenterteilung: **16.08.2006**
(21) Anmeldenummer: 01999704.8
(22) Anmeldetag: 06.12.2001
(51) Int. Cl.: E01B 31/12

(54) **FAHRBARE VORRICHTUNG ZUM SPANABHEBENDEN BEARBEITEN VON SCHIENEN**
TRAVELLING DEVICE FOR MACHINING DOWN RAILS
DISPOSITIF ROULANT DESTINE A L'USINAGE DE RAILS PAR ENLEVEMENT DE COPEAUX

(30) Priorität: 06.12.2000 AT 20412000
(43) Veröffentlichungstag der Anmeldung: 03.09.2003
(73) Patentinhaber: Linsinger Maschinenebau Gesellschaft m.b.H., 4662 Steyrermühl (AT)
(72) Erfinder: KNOLL, Johann, A-4861 Schörfling (AT); NEUBAUER, Walter, A-4694 Ohlsdorf (AT)
(74) Vertreter: Kopecky, Helmut
(86) Internationale Anmeldenummer: PCT/AT2001/000386
(87) Internationale Veröffentlichungsnummer: WO 2002/046531

(56) Entgegenhaltungen:
- EP-A- 0 675 227
- EP-A- 0 955 411
- US-A- 4 103 622

## Beschreibung

Die Erfindung betrifft eine fahrbare Vorrichtung zum spanabhebenden Bearbeiten mindestens des Fahrspiegels von verlegten Schienen, insbesondere von Eisenbahnschienen, wobei die Vorrichtung mindestens ein heb- und auf die Schienen senkbares spanabhebendes Werkzeug aufweist und mit einem entlang der Schienen verfahrbaren Schienenfahrwerk ausgerüstet ist, wobei die fahrbare Vorrichtung als Straßenfahrzeug mit einem Straßenfahrwerk ausgebildet ist und das Schienenfahrwerk gegenüber dem Straßenfahrwerk heb- und senkbar ist und mit einem Antrieb ausgestattet ist.

An Schienen, insbesondere von Eisenbahngleisen, treten während des Betriebes Abnutzungserscheinungen auf, insbesondere als Verformungen und/oder Abtragungen am Schienenkopf Es kann zu in Fahrtrichtung abwechselnd vorhandenen Erhöhungen und Vertiefungen (Rattermarken) kommen. Weiters treten an den den Spurkränzen von Rädern eines Schienenfahrzeuges zugewendeten Abrundungen des Schienenkopfes Materialverdrängungen und Abrieb auf Um einen Austausch solcher Schienen möglichst weit hinauszuschieben ist es bekannt, die Schienen bei Auftreten unzulässiger Abnützungserscheinungen nachzuarbeiten, beispielsweise durch Fräsen und/oder Schleifen zu reprofilieren, d.h. mit einem neuen Fahrspiegel zu versehen. Hierzu werden mit Fräsköpfen und/oder Schleifeinrichtungen versehene Schienenfahrzeuge entlang der Schienen verfahren, und es wird während des Überfahrens der Schienen die spanabhebende Bearbeitung durchgeführt (AT 234 134 A und AT 388 002 A).

Eine solche Nachbearbeitung von im Bett verlegten Schienen bedingt jedoch eine mehr oder weniger lange Fahrplanpause für auf diesen Schienen verkehrende Züge. Zu Beginn bzw. vor Ablauf einer solchen Pause ist es notwendig, das für die Bearbeitung eingerichtete Schienenfahrzeug heranzubringen bzw. auf ein Nebengleis abzustellen. Die hierfür erforderliche Fahrzeit zur und von der zu bearbeitenden Schienenstrecke geht von der eigentlichen Bearbeitungszeit ab. Oftmals ist es schwierig, insbesondere bei größeren Entfernungen, ein solches Schienenfahrzeug zwecks Überstellens zur zu bearbeitenden Schienenstrecke in den Fahrplan zu integrieren, zumal Behinderungen der normal verkehrenden Züge vermieden werden müssen.

Ein weiteres Problem ergibt sich, wenn eine Bearbeitung der Schienen während einer gewissen Jahreszeit nicht möglich ist, beispielsweise im Winter, wenn eine Naßbearbeitung, wie beim Schleifen, bei Temperaturen unter dem Gefrierpunkt nicht mehr möglich ist. Für diese Jahreszeiten besteht zwar die Möglichkeit, das für die Bearbeitung eingerichtete Schienenfahrzeug in Gegenden einzusetzen, in denen während dieser Jahreszeit höhere Temperaturen vorherrschen. Hierzu ist es jedoch erforderlich, das Schienenfahrzeug über weite Strecken in diese Gegenden zu überstellen, was wiederum ein Integrieren der Fahrzeit dieses Schienenfahrzeuges in diverse Fahrpläne, oftmals länderüberschreitend, bedingt. Abgesehen davon ist es erforderlich, Überstellungsgenehmigungen, die zum Befahren der Gleise in den verschiedenen Ländern benötigt werden, einzuholen. Dies kompliziert sich noch, wenn Gleise mit unterschiedlichen Spurweiten beim Überstellen zu befahren sind.

Zur Vermeidung dieser Nachteile ist es bekannt (US-A - 5,525,098 und EP-A1-0 955 411), ein ein Schleifaggregat tragendes Straßenfahrzeug mit einem Schienenfahrwerk auszustatten und den Schienenschleifvorgang durch Abstellen des ebenfalls mit einem Schienenfahrwerk ausgestatteten Schleifaggregates und Führen des Schleifaggregates entlang der Schienen zu bewerkstelligen. Hierbei ist es nachteilig, daß das Schleifaggregat relativ klein und leicht gestaltet werden muß, um im auf das Straßenfahrzeug aufgeladenen Zustand vom Straßenfahrzeug transportiert werden zu können. Zudem ist der Aufwand von Schienenfahrwerken sowohl für das Straßenfahrzeug als auch das Schleifaggregat konstruktiv, gewichtsmäßig und auch kostenmäßig enorm.

Weiters muß jedes der Schienenfahrwerke mit einer Antriebstechnik versehen sein. Für hohe Genauigkeiten der Schienenbearbeitung - z.B. zur Vermeidung von Schwingungen - sollte das Schleifaggregat möglichst steif und damit schwer ausgeführt sein, was ebenfalls einen hohen Aufwand erfordert. Für den Einsatz eines Fräsers wären die bekannten, auf der Straße fahrbaren Fahrzeuge wegen der extrem hohen Schnittkräfte nicht geeignet. Infolge von beim Fräsen auftretenden Schwingungen würden sich sehr kurze Fräser-Standzeiten oder ein vorzeitiger Bruch der Fräserschneiden ergeben.

Die Erfindung bezweckt die Vermeidung dieser Nachteile und Schwierigkeiten und stellt sich die Aufgabe, eine hohe Standzeit für das spanabhebende Werkzeug bei einfacher, jedoch besonders stabiler Konstruktion der Vorrichtung zu erzielen. Insbesondere soll ein geringer Verschleiß gesichert und ein Zerstören des Werkzeuges und damit Fehler an der bearbeiteten Schienenoberfläche vermieden werden.

Diese Aufgabe wird erfindungsgemäß dadurch gelöst, daß das Straßenfahrzeug eine Brückenkonstruktion als Tragwerk für das spanabhebende Werkzeug aufweist, wobei ein mittlerer, das spanabhebende Werkzeug tragender Teil der Brückenkonstruktion, vordere und hintere Endteile der Brückenkonstruktion, die die Strapßen- und Schienenfahrwerke tragen, höhenmäßig überragt.

Vorzugsweise weist das Straßenfahrzeug ein Straßenfahrwerk mit vorderer und hinterer Doppelachse auf, wobei zweckmäßig die maximale Achslast des Straßenfahrwerkes 10 t beträgt und eine maximal zulässige Länge nicht überschritten wird. Hierdurch ist sichergestellt, daß das Straßenfahrzeug für den normalen Straßenverkehr, ohne eine Sondergenehmigung zu erfordern, eingesetzt werden kann.

Eine vorteilhafte Konstruktion des Straßenfahrzeuges ist darin zu sehen, daß das Straßenfahrzeug einen Rahmen aufweist, der zwischen dem vorderen Ende und dem hinteren Ende die über einen normalen LKW-Fahrzeugrahmen hochgezogene Brückenkonstruktion aufweist, wobei die Brückenkonstruktion vorteilhaft von mindestens zwei seitlich im Straßenfahrzeug angeordneten Längsträgern gebildet ist, die jeweils auf die vordere und die hintere Doppelachse tragende Rahmenteile aufgesetzt sind, und wobei weiters die Brückenkonstruktion mit einer Aussteifung zur Erhöhung der Verwindungssteifigkeit um eine in Längsrichtung des Straßenfahrzeuges liegende Achse versehen ist.

Vorzugsweise ist die Aussteifung von Beton gebildet, vorteilhaft von einem die Längsträger der Brückenkonstruktion verbindenden Betonblock.

Eine gute Kraftübertragung der Schnittkräfte ist gegeben, wenn das Schienenfahrwerk zwei Drehgestelle aufweist, von denen eines in Fahrtrichtung des Straßenfahrzeuges vor dem spanabhebenden Werkzeug und eines hinter dem spanabhebenden Werkzeug angeordnet ist, wobei es platzmäßig günstig ist, wenn ein Drehgestell knapp hinter der vorderen Doppelachse und ein Drehgestell knapp hinter der hinteren Doppelachse des Straßenfahrwerkes angeordnet ist.

Zwecks einfachen Eingleisens und Ausgleisens des Straßenfahrzeuges in ein und aus einem Gleis ist vorteilhaft mindestens ein Drehgestell, vorzugsweise das hintere Drehgestell, um 90° um eine vertikale Achse verschwenkbar.

Zur Erzielung einer guten Führung der spanabhebenden Werkzeuge ist zweckmäßig das vordere Drehgestell gegenüber der Fahrtrichtung zwecks Verspannung des Drehgestelles zwischen den Schienen eines Gleises verschwenkbar und in der verschwenkten Stellung fixierbar und/oder mit einer vorbestimmten Kraft gegen die Schienen verspannbar.

Infolge der Anordnung der spanabhebenden Werkzeuge zwischen Vorder- und Hinterachse des Straßenfahrwerkes ist das Straßenfahrzeug zweckmäßig über die Vorderräder, die über eine Kardanwelle mit dem Dieselaggregat gekoppelt sind, antreibbar, wobei für eine allfällige Ausstattung des Straßenfahrzeuges mit einem Allradantrieb die hinteren Räder mittels eines Hydroantriebes antreibbar sind, so daß für die Hinterräder keine Kardanwelle untergebracht werden muß.

Als Antriebsaggregat hat sich für das Schienenfahrwerk ein Hydro- oder Elektroantriebsaggregat als vorteilhaft erwiesen.

Das spanabhebende Werkzeug ist an einer Werkzeugspindel montiert, die zweckmäßig gegenüber dem Schienenfahrwerk heb- und senkbar sowie horizontal verstellbar, also auch um eine vertikal verlaufende Schwenkachse schwenkbar ist.

Für eine gleichzeitige Bearbeitung beider Schienen eines Gleises ist an jeder Seite des Straßenfahrzeuges mindestens ein spanabhebendes Werkzeug vorgesehen.

Zur Minimierung von Stillstandszeiten ist das Straßenfahrzeug mit einer Werkzeugwechseleinrichtung zum Wechseln des spanabhebenden Werkzeuges versehen, die einen Werkzeugwechselkran sowie vorzugsweise ein Werkzeugmagazin und eine Werkzeugeinstellvorrichtung aufweist.

Zur Einstellung der spanabhebenden Bearbeitung ist vorteilhaft ein gegen die Schiene preßbarer Kopierschuh für das spanabhebende Werkzeug vorgesehen, der mit einer Werkzeugzustelleinrichtung gekoppelt ist.

Als spanabhebende Werkzeuge sind Fräswerkzeuge und/oder Schleifwerkzeuge vorgesehen, wobei die Fräswerkzeuge auch zum Schruppen eingesetzt werden können.

Zweckmäßig ist das Ist-Profil der Schienen sowie das bearbeitete Schienenprofil über eine Meßeinrichtung, wie einen Tastkopf, erfaßbar.

Vorteilhaft ist eine gleichzeitige Bearbeitung einer Schiene mit mindestens zwei hintereinander angeordneten Werkzeugen, wie z.B. mittels eines Fräswerkzeuges und eines Schleifwerkzeuges, zu welchem Zweck je Fahrzeugseite zwei Werkzeugspindeln vorgesehen sind.

Zur Schonung der Umwelt ist am Straßenfahrzeug eine Späne- und Staubentsorgungseinrichtung vorgesehen, die eine Saugeinrichtung, Saugleitungen und einen Spänebehälter aufweist.

Zur Einsparung einer zweiten Fahrerkabine ist zwecks Rückwärtsfahrens auf den Schienen am hinteren Ende des Straßenfahrzeuges eine mit einem in der Fahrerkabine des Straßenfahrzeuges vorgesehenen Bildschirm gekoppelte Kamera angeordnet.

Vorteilhaft ist die Beifahrerseite der Straßenfahrzeugfahrerkabine als Bedienungsstand für das Fahren auf den Schienen und das spanabhebende Bearbeiten der Schienen ausgebildet. Für das Straßenfahrzeug ist es nicht notwendig, eine eigene Konstruktion des gesamten Fahrzeuges zu schaffen. Vielmehr genügt der Umbau eines LKW-Fahrzeuges zu einem erfindungsgemäßen Straßenfahrzeug, wobei ein Fahrzeugrahmenteil hinter der bzw. den Vorderachse(n) und vor der bzw. den Hinterachse(n) entfernt und dieser Teil durch mindestens zwei Seitenlängsträger, die am vorderen Fahrzeugrahmenteil und am hinteren Fahrzeugrahmenteil, die die Vorder- bzw. Hinterachse(n) tragen, direkt oder indirekt abgestützt werden, ersetzt wird, und wobei weiters die Seitenlängsträger durch eine Aussteifung miteinander verbunden werden.

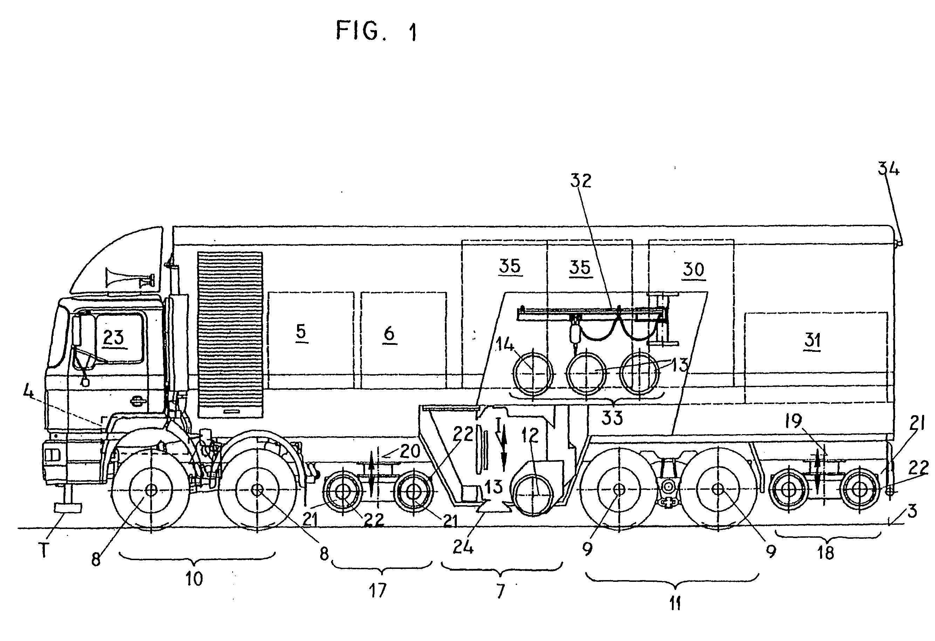

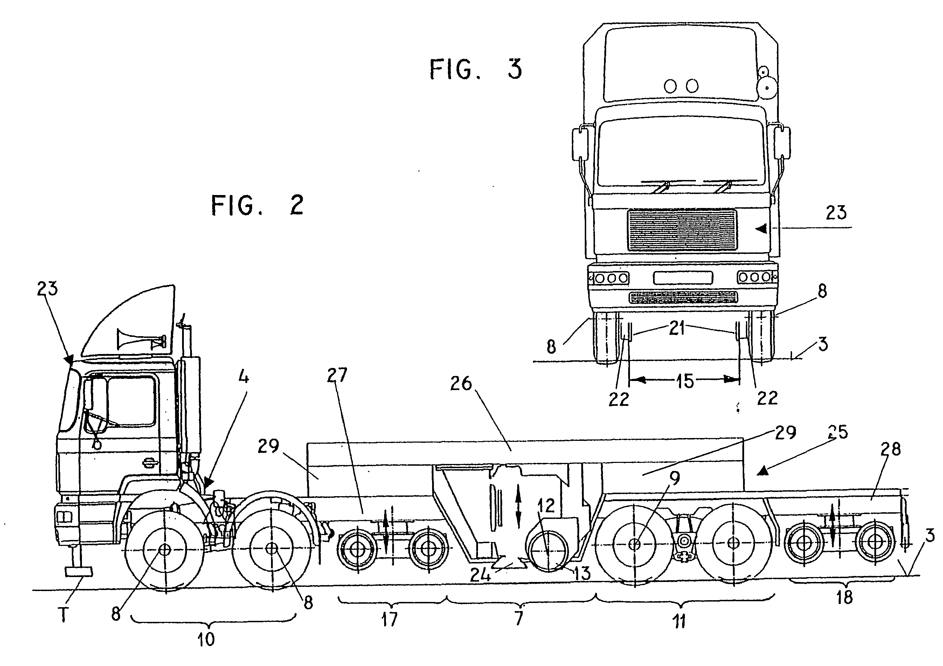

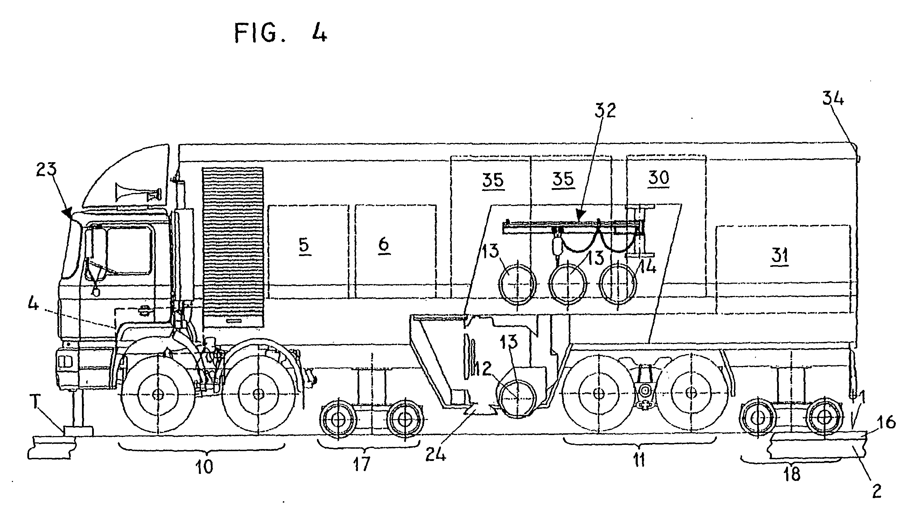

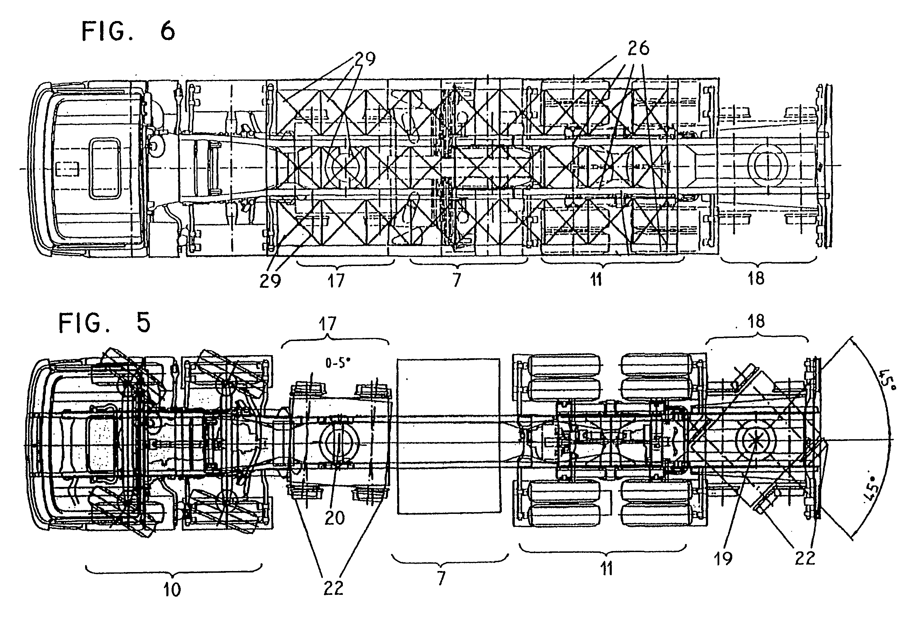

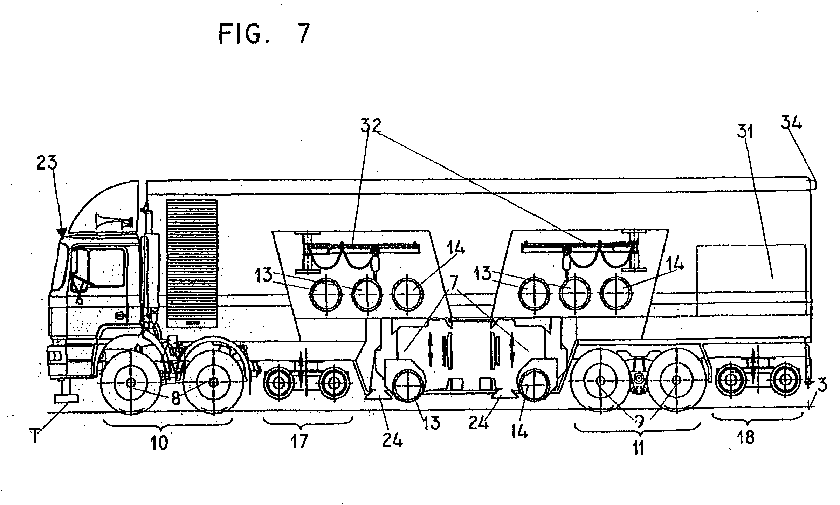

Die Erfindung ist nachfolgend anhand der Zeichnung an mehreren Ausführungsbeispielen näher erläutert, wobei Fig. 1 eine Seitenansicht eines erfindungsgemäßen Straßenfahrzeuges und Fig. 2 eine Seitenansicht eines teilweise demontierten erfindungsgemäßen Straßenfahrzeuges, d.h. ohne Aufbauten, zeigen. Fig. 3 stellt eine Vorderansicht des Straßenfahrzeuges dar. Fig. 4 zeigt den Einsatz des Straßenfahrzeuges auf einem Gleis, wogegen die Fig. 1 bis 3 dieses Straßenfahrzeug in einem für das Befahren von Straßen gebrachten Zustand veranschaulichen. Fig. 5 zeigt eine Ansicht des Straßenfahrzeuges von unten, Fig. 6 von oben, u.zw. jeweils ohne Aufbauten. Fig. 7 veranschaulicht ein erfindungsgemäßes Straßenfahrzeug, das an jeder Fahrzeugseite mit zwei hintereinander angeordneten spanabhebenden Werkzeugen ausgerüstet ist.

In Fig. 1 ist ein erfindungsgemäßes Straßenfahrzeug im Zustand für den Straßenbetrieb, d.h. für die Überstellung zu oder von einem zu reprofilierenden Gleisabschnitt veranschaulicht. Dieses Straßenfahrzeug ist im Grundkonzept ein vierachsiger LKW, der in einer nachfolgend beschriebenen Weise für das spanabhebende Bearbeiten mindestens eines Fahrspiegels 1 von verlegten Schienen 2 umgebaut wurde. Seine Achslast liegt bei etwa 10 t, seine Länge bei etwa 12 m, so daß dieser LKW auf sämtlichen Straßen 3 Europas, die für den Verkehr solcher Schwer-LKWs dienen, verkehren kann, u.zw. ohne eine Sondergenehmigung zu erfordern.

Als Antrieb ist ein Dieselmotor 4 vorgesehen, der die Vorderräder antreibt. Weiters ist der Dieselmotor 4 mit einem Generator 5 und mit einem gegebenenfalls die Hinterräder antreibenden Hydraulikaggregat 6 gekoppelt.

Zum spanabhebenden Bearbeiten des Fahrspiegels 1 oder auch eines darüber hinausgehenden Abschnittes einer Schiene 2 ist eine kombinierte Bearbeitungseinheit 7 zwischen einer hinteren Vorderachse 8 und einer vorderen Hinterachse 9 der Straßenfahrwerke 10, 11 des LKW eingebaut. Diese Bearbeitungseinheit 7 weist eine in Richtung des Doppelpfeiles I heb- und senkbare Werkzeugspindel 12 auf, die mit einem Fräser 13 oder einer Schleifscheibe 14 bestückt werden kann. Eine solche kombinierte Bearbeitungseinheit 7 findet sich an beiden Seiten des erfindungsgemäßen Straßenfahrzeuges, wobei sich die beiden Werkzeugspindeln 12 in einer Distanz 15 voneinander befinden, die der Distanz 15 der Schienen 2 einer Gleisanlage entspricht, so daß mit jeweils einer Werkzeugspindel 12 ein Werkzeug 13, 14 oberhalb des zu bearbeitenden Schienenkopfes 16 in Stellung bringbar ist.

Weiters können die Werkzeugspindeln 12 horizontal verstellbar und auch gegenüber der Bearbeitungseinheit 7 verschwenkbar sein, um optimale Eingriffswinkel der Werkzeuge 13, 14 einzustellen.

Um das Straßenfahrzeug auf die Schienen einzugleisen und auf diesen fahren zu lassen, weist es zwischen der hinteren Vorderachse 8 und der kombinierten Bearbeitungseinheit 7 sowie hinter der hinteren Hinterachse 9 jeweils ein heb- und senkbares und in gehobener bzw. abgesenkter Stellung fixierbares Schienenfahrwerk 17, 18, gebildet von jeweils einem Drehgestell, auf.

Das hintere Drehgestell 18 ist um etwa 90° um eine vertikale Achse 19 verschwenkbar, so daß ein Aufsetzen dieses Drehgestelles 18 auf die Schienen 2 bei einer Schienen-Straßen-Kreuzung, d.h. einem Bahnübergang, möglich ist. Das vordere Drehgestell 17 braucht nur um einige wenige Grad um eine vertikale Achse 20 verschwenkbar sein, was den Zweck hat, die Spurkränze 21 der Räder 22 dieses Drehgestelles 17 an den Schienen 2 eines Gleises während des Bearbeitens der Schienen 2 möglichst spielfrei anliegen zu lassen oder gegen die Schienen zu pressen. Es soll hierdurch zu einem Verspannen des Drehgestelles 17 im Gleis und damit zu einer guten und spielfreien Seitenführung des Straßenfahrzeuges kommen.

Das Straßenfahrzeug weist einen Vorderradantrieb auf, u.zw. über Kardanwellen. Die Hinterachsen 9 sind gegebenenfalls, wenn ein Allradantrieb gewünscht ist, mittels eines Hydroantriebes antreibbar, wobei die Hydraulikversorgung über das Hydraulikaggregat 5, das an den Dieselmotor 4 koppelbar ist, erfolgt.

Der Antrieb für die Drehgestelle 17 und 18 fiir das Fahren auf den Schienen 2 erfolgt mittels Hydroantrieb oder elektrischem Antrieb. Hierfür dienen das Hydraulikaggregat 6 sowie gegebenenfalls der Generator S.

Die Fahrerkabine 23 des Straßenfahrzeuges ist mit allen Bedienungselementen für den Fahrbetrieb auf der Straße 3 ausgestattet. An der Stelle des Beifahrersitzes sind die Bedienungselemente für den Fahrbetrieb auf den Schienen 2 sowie zum Betreiben der spanabhebenden Werkzeuge 13, 14, d.h. der Fräs- und/oder Schleifwerkzeuge, vorgesehen. Hier ist auch ein PC mit Bildschirm und Tastatur installiert. Weiters ist noch ein Bildschirm für eine Videoüberwachung des Bearbeitungsbereiches der Schienen 2 vorhanden. Der PC ist als Industrie-PC ausgeführt, wobei ein NC-Programm die Werkzeugspindeln 12 kontrolliert und die Schnittdaten kalkuliert. Das NC-Programm wird mit Daten der Schienenmeßeinrichtung, die beispielsweise Kopierfinger oder andere Wegaufnehmer aufweisen, gespeist. Es werden sowohl das unbearbeitete und das bearbeitete Schienenkopfprofil vermessen, z.B. mittels eines Tastkopfes T, so daß das vor und nach dem Bearbeiten vorhandene Ist-Profil mindestens des Fahrspiegels 1 ständig kontrolliert werden kann. Die von den Aufnehmern aufgenommenen Meßdaten werden am Bildschirm des PC angezeigt und können dort mit dem Sollprofil verglichen werden.

Der Antrieb für die Werkzeugspindel 12 ist für die jeweilige Bearbeitungsart, wie Fräsen oder Schleifen, über einen Hauptspindelmotor mit Getriebe regelbar. Die Bearbeitungstiefe wird mittels eines Kopierschuhes 24, dessen Lage gegenüber der Werkzeugspindel 12 einstellbar ist und der beim Bearbeiten einer Schiene 2 auf dieser zum Anliegen kommt, geregelt. Für den Schleifbetrieb ist eine automatische Abzieheinrichtung einer an der Werkzeugspindel 12 montierten Schleifscheibe 14 vorgesehen.

Es ist wichtig, daß das spanabhebende Werkzeug 13, 14 gegenüber den Drehgestellen 17 und 18 exakt positionierbar ist, u.zw. sowohl in horizontaler als auch in vertikaler Richtung. Hierfür sind Präzisionslinearführungen mit sehr hohen Tragzahlen vorgesehen, die die Aufnahme der Bearbeitungskräfte sowohl in horizontaler als auch in vertikaler Richtung gestatten. Während Überstellungsfahrten, sei es auf der Schiene 2 oder auf der Straße 3, ist die Werkzeugspindel 12 bzw. das spanabhebende Werkzeug 13, 14 in angehobener Position mechanisch arretierbar.

Eine besonders vorteilhafte Ausführungsform des Straßenfahrzeuges weist eine hochgezogene Brückenkonstruktion 25 auf, an der die Bearbeitungseinheit 7 montiert ist, an der das spanabhebende Werkzeug 13, 14 mitsamt Antrieb und Einstellvorrichtung angeordnet ist. Diese Brückenkonstruktion 25, die aus Fig. 2 und Fig. 6 zu ersehen ist, ist von vier Längsträgern 26 gebildet, die einen vorderen LKW-Fahrzeugrahmenteil 27, der die Vorderachsen 8 trägt, und einen hinteren LKW-Fahrzeugrahmenteil 28, der die Hinterachsen 9 trägt, verbinden. Diese Längsträger 26 befinden sich an jeweils einer Längsseite des Straßenfahrzeuges sowie im mittleren Bereich und sind durch Aussteifungen 29 miteinander verbunden. Diese Aussteifungen sind vorzugsweise jeweils von Beton gebildet, wodurch eine hohe Verwindungssteifigkeit des gesamten Fahrzeugrahmens gegeben ist, können jedoch auch von Fachwerken gebildet sein.

Zur Herstellung eines solcherart mit einer Brückenkonstruktion 25 ausgestatteten Straßenfahrzeuges wird zweckmäßig der Rahmen eines herkömmlichen vierachsigen LKWs geteilt, ein zwischen den vorderen und hinteren Fahrzeugrahmenteilen 27 und 28 liegender Teil entfernt und werden die Längsträger 26 in einer erhöhten Position mit den verbleibenden Fahrzeugrahmenteilen 27, 28 verbunden, z.B. verschweißt.

Zum Entsorgen der Frässpäne bzw. des Schleifstaubes ist am Straßenfahrzeug eine Späne- und Staubentsorgungseinrichtung vorgesehen, die eine Saugeinrichtung 30 mit Antrieb, Gebläseluftfilter, Verteileinrichtung sowie Saugleitungen und einen Späneaufnahmebehälter 31 aufweist.

Zum Wechseln der spanabhebenden Werkzeuge 13, 14 ist das Straßenfahrzeug mit einem Werkzeugwechsella-an 32 ausgestattet, mit dem von einem Werkzeugmagazin 33 vorrätige Werkzeuge 13, 14 auf die Werkzeugspindel 12 gesetzt werden können. Um den exakten Sitz des Werkzeuges 13, 14 zu gewährleisten, ist eine genaue, vorzugsweise konische Werkzeugaufnahme vorhanden.

Um die Länge des Straßenfahrzeuges begrenzt halten zu können, ist am hinteren Ende des Straßenfahrzeuges eine Kamera 34 für den Rückwärtsfahrbetrieb vorgesehen, insbesondere für das Fahren auf den Schienen, wobei die Überwachung von der Fahrerkabine 23 aus über einen Bildschirm erfolgt.

Der Aufbau des Straßenfahrzeuges ist weiters noch mit Elektroschränken 35 ausgestattet, in denen auch gegen Temperaturschwankungen empfindliche Geräte mittels eines Klimagerätes geschützt untergebracht sind.

Die Funktion des erfindungsgemäßen Straßenfahrzeuges ist folgende:

Überstellungsfahrten, d.h. Fahrten zu den zu bearbeitenden Gleisbereichen, erfolgen soweit wie möglich auf der Straße 3, wodurch eine sehr hohe Flexibilität gewährleistet ist. Während des Arbeitsbetriebes, also beim Fahren entlang eines Gleises mittels der Schienenfahrwerke 17, 18, wird während einer ersten Überfahrt des Gleises jede der Schienen 2 durch Fräsen (Umfangsfräsen) reprofiliert. Hierdurch werden Querprofilabweichungen, Längswellen sowie Beschädigungen an der Schienenoberfläche in einem Arbeitsgang beseitigt. Dieses Fräsen erfolgt mittels Fräswerkzeugen 13, wie sie beispielsweise in der Anmeldung A 1241/2000 beschrieben sind. Anschließend erfolgt ein zweiter Arbeitsgang, also ein zweites Überfahren der bereits gefrästen Schiene 2, wobei die Schienenoberfläche optisch mittels Umfangsschleifen verbessert wird. Dies wird vorzugsweise im Trockenschliffverfahren durchgeführt. Hierbei kommt ein Schleifverfahren zur Anwendung, wie es beispielsweise in der österreichischen Patentanmeldung A 1242/2000 dargelegt ist.

Durch die Kombination dieser beiden Arbeitsgänge kann eine Schienenkopfqualität erreicht werden, deren Genauigkeit mit der von neuen Schienen nicht nur vergleichbar, sondern höher ist. Zwischen den beiden Arbeitsgängen erfolgt ein Wechsel des Fräswerkzeuges 13 gegen eine Schleifscheibe 14 mittels des Werkzeugwechselkranes 32. Diese Arbeit ist in etwa 10 Minuten für beide Seiten durchführbar.

Um mit einer einzigen Überfahrt diese beiden Arbeitsgänge bewerkstelligen zu können, kann ein erfindungsgemäßes Straßenfahrzeug auch an jeder Fahrzeugseite mit zwei hintereinander liegenden Werkzeugspindeln 12 ausgestattet werden, wobei die erste mit einem Fräswerkzeug 13 und die zweite mit einer Schleifscheibe 14 bestückt ist (vgl. Fig. 7).

Die einzelnen Arbeitsschritte für das Fräsen und Schleifen, die vom Bedienungspersonal ausgeführt werden müssen, sind identisch. Zunächst wird der Antrieb der Werkzeugspindel 12 gestartet, sodann erfolgt die Positionierung des spanabhebenden Werkzeuges 13 bzw. 14 in horizontaler Richtung, vorzugsweise mittels eines fotoelektrischen Positioniersystems. Hernach wird die Werkzeugspindel 12 mit dem Werkzeug 13 bzw. 14 hydraulisch abgesenkt. Eine Feineinstellung des spanabhebenden Werkzeuges 13 bzw. 14 in vertikaler Richtung erfolgt mittels Kopierfinger. Anschließend startet der Antrieb für die Drehgestelle 17 und 18. Die erforderliche Bearbeitungstiefe erfolgt aufgrund der erfaßten Meßwerte, wobei eine konstante Anpassung während des Bearbeitens einer Schiene 2 aufgrund von online-verarbeiteten Meßwerten oder durch den Kopierschuh 24 erfolgt.

Der oben geschilderte Bearbeitungsvorgang, nämlich zuerst Fräsen und dann Schleifen, ist der übliche. Es ist jedoch auch möglich, eine Bearbeitung nur durch Fräsen oder nur durch Schleifen durchzuführen, wobei beispielsweise auch zunächst ein Schruppen und dann ein Feinfräsen vorstellbar ist. Diese Varianten richten sich je nach den Anforderungen, die an das Gleis gestellt werden, zumal an Nebengleise andere Anforderungen als an Hauptgleise aufgrund unterschiedlicher Fahrgeschwindigkeiten der Schienenfahrzeuge etc. gestellt werden.

## Patentansprüche

1. Fahrbare Vorrichtung zum spanabhebenden Bearbeiten mindestens des Fahrspiegels (1) von verlegten Schienen (2), insbesondere von Eisenbahnschienen, wobei die Vorrichtung mindestens ein heb- und auf die Schienen (2) senkbares spanabhebendes Werkzeug (13, 14) aufweist und mit einem entlang der Schienen (2) verfahrbaren Schienenfahrwerk (17, 18) ausgerüstet ist, wobei die fahrbare Vorrichtung als Straßenfahrzeug mit einem Straßenfahrwerk (10, 11) ausgebildet ist und das Schienenfahrwerk (17, 18) gegenüber dem Straßenfahrwerk (10, 11) heb- und senkbar ist und mit einem Antrieb ausgestattet ist, **dadurch gekennzeichnet, daß** das Straßenfahrzeug eine Brückenkonstruktion (25) als Tragwerk für das spanabhebende Werkzeug (13, 14) aufweist, wobei ein mittlerer, das spanabhebende Werkzeug (13, 14) tragender Teil (26) der Brückenkonstruktion (25) vordere und hintere Endteile (27, 28) der Brückenkonstruktion (25), die die Straßen- und Schienenfahrwerke (10, 11 ; 17, 18) tragen, höhenmäßig überragt.

2. Vorrichtung nach Anspruch 1, **dadurch gekennzeichnet, daß** das Straßenfahrzeug ein Straßenfahrwerk (10, 11) mit vorderer und hinterer Doppelachse (8, 9) aufweist.

3. Vorrichtung nach Anspruch 2, **dadurch gekennzeichnet, daß** die maximale Achslast des Straßenfahrwerkes 10 t beträgt.

4. Vorrichtung nach einem oder mehreren der Ansprüche 1 bis 3, **dadurch gekennzeichnet, daß** das Straßenfahrzeug einen Rahmen (26, 27, 28) aufweist, der zwischen dem vorderen Ende und dem hinteren Ende die über einen normalen LKW-Fahrzeugrahmen hochgezogene Brückenkonstruktion (25) aufweist.

5. Vorrichtung nach Anspruch 4, **dadurch gekennzeichnet, daß** die Brückenkonstruktion (25) von mindestens zwei seitlich im Straßenfahrzeug angeordneten Längsträgern (26) gebildet ist, die jeweils auf die vordere und die hintere Doppelachse (8, 9) tragende Rahmenteile (27, 28) aufgesetzt sind.

6. Vorrichtung nach Anspruch 4 oder 5, **dadurch gekennzeichnet, daß** die Brückenkonstruktion (25) mit einer Aussteifung (29) zur Erhöhung der Verwindungssteifigkeit um eine in Längsrichtung des Straßenfahrzeuges liegende Achse versehen ist.

7. Vorrichtung nach Anspruch 6, **dadurch gekennzeichnet, daß** die Aussteifung (29) von Beton gebildet ist, vorzugsweise von einem die Längsträger (26) der Brückenkonstruktion (25) verbindenden Betonblock.

8. Vorrichtung nach einem oder mehreren der Ansprüche 1 bis 7, **dadurch gekennzeichnet, daß** das Schienenfahrwerk zwei Drehgestelle (17, 18) aufweist, von denen eines (17) in Fahrtrichtung des Straßenfahrzeuges vor dem spanabhebenden Werkzeug (13, 14) und eines (18) hinter dem spanabhebenden Werkzeug (13, 14) angeordnet ist.

9. Vorrichtung nach Anspruch 8, **dadurch gekennzeichnet, daß** ein Drehgestell (17) knapp hinter der vorderen Doppelachse (8) und ein Drehgestell (18) knapp hinter der hinteren Doppelachse (9) des Straßenfahrwerkes (9, 10) angeordnet ist.

10. Vorrichtung nach Anspruch 8 oder 9, **dadurch gekennzeichnet, daß** mindestens ein Drehgestell (18), vorzugsweise das hintere Drehgestell (18), um 90° um eine vertikale Achse (19) verschwenkbar ist.

11. Vorrichtung nach einem oder mehreren der Ansprüche 8 bis 10, **dadurch gekennzeichnet, daß** das vordere Drehgestell (17) gegenüber der Fahrtrichtung zwecks Verspannung des Drehgestelles (17) zwischen den Schienen (2) eines Gleises verschwenkbar und in der verschwenkten Stellung fixierbar und/oder mit einer vorbestimmten Kraft gegen die Schienen (2) verspannbar ist.

12. Vorrichtung nach einem oder mehreren der Ansprüche 8 bis 11, **dadurch gekennzeichnet, daß** die Drehgestelle (17, 18) federnd ausgeführt sind.

13. Vorrichtung nach einem oder mehreren der Ansprüche 1 bis 12, **dadurch gekennzeichnet, daß** das Straßenfahrzeug über die Vorderräder, die über eine Kardanwelle mit einem Dieselmotor (4) gekoppelt sind, antreibbar ist.

14. Vorrichtung nach Anspruch 13, **dadurch gekennzeichnet, daß** das Straßenfahrzeug mit einem Allradantrieb ausgestattet ist, wobei die hinteren Räder mittels eines Hydroantriebes antreibbar sind.

15. Vorrichtung nach einem oder mehreren der Ansprüche 1 bis 14, **dadurch gekennzeichnet, daß** das Antriebsaggregat für das Schienenfahrwerk (17, 18) von einem Hydro- oder Elektroantriebsaggregat gebildet ist.

16. Vorrichtung nach einem oder mehreren der Ansprüche 1 bis 15, **dadurch gekennzeichnet, daß** eine das spanabhebende Werkzeug (13, 14) tragende Werkzeugspindel (12) gegenüber dem Schienenfahrwerk (17, 18) heb- und senkbar und in gehobener Position fixierbar ist.

17. Vorrichtung nach Anspruch 16, **dadurch gekennzeichnet, daß** die Werkzeugspindel (12) gegenüber dem Schienenfahrwerk (17, 18) horizontal verstellbar ist.

18. Vorrichtung nach Anspruch 16 oder 17, **dadurch gekennzeichnet, daß** die Werkzeugspindel (12) um eine etwa vertikal verlaufende Schwenkachse schwenkbar ist.

19. Vorrichtung nach einem oder mehreren der Ansprüche 1 bis 18, **dadurch gekennzeichnet, daß** für die gleichzeitige Bearbeitung beider Schienen (2) eines Gleises an jeder Seite der fahrbaren Vorrichtung mindestens ein spanabhebendes Werkzeug (13, 14) vorgesehen ist.

20. Vorrichtung nach einem oder mehreren der Ansprüche 1 bis 19, **dadurch gekennzeichnet, daß** eine Werkzeugwechseleinrichtung zum Wechseln des spanabhebenden Werkzeuges vorgesehen ist, die einen Werkzeugwechselkran (32) sowie vorzugsweise ein Werkzeugmagazin (33) und eine Werkzeugaufnahme aufweist.

21. Vorrichtung nach einem oder mehreren der Ansprüche 1 bis 20, **dadurch gekennzeichnet, daß** ein gegen die Schiene preßbarer Kopierschuh (24) für das spanabhebende Werkzeug (13, 14) vorgesehen ist, der mit einer Werkzeugzustelleinrichtung gekoppelt ist.

22. Vorrichtung nach einem oder mehreren der Ansprüche 1 bis 21, **dadurch gekennzeichnet, daß** als spanabhebende Werkzeuge Fräswerkzeuge (13) und/oder Schleifwerkzeuge (14) vorgesehen sind.

23. Vorrichtung nach einem oder mehreren der Ansprüche 1 bis 22, **dadurch gekennzeichnet, daß** das Ist-Profil der Schienen (2) mittels einer Meßeinrichtung, wie einem Tastkopf (T), erfaßbar ist.

24. Vorrichtung nach einem oder mehreren der Ansprüche 1 bis 23, **dadurch gekennzeichnet, daß** das bearbeitete Schienenprofil über eine Meßeinrichtung, wie einen Tastkopf (T), erfaßbar ist.

25. Vorrichtung nach einem oder mehreren der Ansprüche 1 bis 24, **dadurch gekennzeichnet, daß** zur gleichzeitigen Bearbeitung einer Schiene (2) mittels mindestens zweier hintereinander angeordneter Werkzeuge, wie z.B. mittels eines Fräswerkzeuges (13) und eines Schleifwerkzeuges (14), mindestens zwei Werkzeugspindeln (12) vorgesehen sind.

26. Vorrichtung nach einem oder mehreren der Ansprüche 1 bis 25, **dadurch gekennzeichnet, daß** eine Späne- und Staubentsorgungseinrichtung vorgesehen ist, die eine Saugeinrichtung (30), Saugleitungen und einen Spänebehälter (31) aufweist.

27. Vorrichtung nach einem oder mehreren der Ansprüche 1 bis 26, **dadurch gekennzeichnet, daß** zwecks Rückwärtsfahrens auf den Schienen am hinteren Ende des Straßenfahrzeuges eine mit einem in der Fahrerkabine des Straßenfahrzeuges vorgesehenen Bildschirm gekoppelte Kamera (34) angeordnet ist.

28. Vorrichtung nach einem oder mehreren der Ansprüche 1 bis 27, **dadurch gekennzeichnet, daß** die Beifahrerseite der Straßenfahrzeugfahrerkabine als.Bedienungsstand für das Fahren auf den Schienen (2) und das spanabhebende Bearbeiten der Schienen (2) ausgebildet ist.

29. Vorrichtung nach einem oder mehreren der Ansprüche 1 bis 28, **dadurch gekennzeichnet, daß** das spanabhebende Werkzeug (13, 14) während des Bearbeitens der Schiene (2) zwischen den Auflagestellen der Brückenkonstruktion abgestützt ist.

30. Vorrichtung nach einem oder mehreren der Ansprüche 1 bis 29, **dadurch gekennzeichnet, daß** das Antriebsaggregat des Straßenfahrzeuges Energie für den Antrieb des Schienenfahrwerkes und Energie für den Antrieb des spanabhebenden Werkzeuges (13, 14) liefert.

31. Verfahren zum Umbau eines LKW-Fahrzeuges zu einem Straßenfahrzeug nach einem oder mehreren der Ansprüche 1 bis .30, **dadurch gekennzeichnet, daß** ein Fahrzeugrahmenteil hinter der bzw. den Vorderachse(n) (8) und vor der bzw. den Hinterachse(n) (9) entfernt und dieser Teil durch mindestens zwei eine Brückenkonstruktion bildende Seitenlängsträger (26), die (26), die am vorderen Fahrzeugrahmenteil (27) und am hinteren Fahrzeugrahmenteil (28), die die Vorder- bzw. Hinterachse(n) (8, 9) tragen, direkt oder indirekt abgestützt werden, ersetzt wird.

32. Verfahren nach Anspruch 31, **dadurch gekennzeichnet, daß** die Seitenlängsträger (26) durch eine Aussteifung (29) miteinander verbunden werden.

## Claims

1. A moveable device for machining down at least the driving level (1) of laid rails (2), especially of railway rails, the device having at least one metal-removing tool (13, 14) which can be raised and lowered onto the rails (2) and being equipped with a rail running gear (17, 18) which is movable along the rails (2), wherein the moveable device is designed as a road vehicle with a road running gear (10, 11) and the rail running gear (17, 18) can be raised and lowered relative to the road running gear (10, 11) and is equipped with a driving device, **characterized in that** the road vehicle comprises a bridge construction (25) as a supporting framework for the metal-removing tool (13, 14), with a central portion (26) of said bridge construction (25), which central portion supports the metal-removing tool (13, 14), projecting above the height of front and rear end portions (27, 28) of the bridge construction (25) which support the road and rail running gears (10, 11; 17, 18).

2. A device according to claim 1, **characterized in that** the road vehicle has a road running gear (10, 11) comprising a front and a rear tandem axle (8, 9).

3. A device according to claim 2, **characterized in that** the maximum axle load of the road running gear amounts to 10 t.

4. A device according to one or several of claims 1 to 3, **characterized in that** the road vehicle has a frame (26, 27, 28) comprising, between the front end and the rear end, the bridge construction (25) pulled up via a standard truck vehicle frame.

5. A device according to claim 4, **characterized in that** the bridge construction (25) is formed by at least two longitudinal beams (26) arranged laterally in the road vehicle, which beams are placed onto frame portions (27, 28) supporting the front and the rear tandem axles (8, 9), respectively.

6. A device according to claim 4 or 5, **characterized in that** the bridge construction (25) is provided with a reinforcement (29) for increasing the torsional resistance around an axis lying in the longitudinal direction of the road vehicle.

7. A device according to claim 6, **characterized in that** the reinforcement (29) is formed from concrete, preferably from a concrete block connecting the longitudinal beams (26) of the bridge construction (25).

8. A device according to one or several of claims 1 to 7, **characterized in that** the rail running gear comprises two pivoted bogies (17, 18), one of which (17) being arranged in the direction of travel of the road vehicle in front of the metal-removing tool (13, 14) and the other one (18) being arranged behind the metal-removing tool (13, 14).

9. A device according to claim 8, **characterized in that** one pivoted bogie (17) is arranged immediately behind the front tandem axle (8) and the other pivoted bogie (18) is arranged immediately behind the rear tandem axle (9) of the road running gear (9, 10).

10. A device according to claim 8 or 9, **characterized in that** at least one pivoted bogie (18), preferably the rear pivoted bogie (18), is pivotable by 90° about a vertical axis (19).

11. A device according to one or several of claims 8 to 10, **characterized in that** the front pivoted bogie (17) is pivotable relative to the direction of travel in order to brace the pivoted bogie (17) between the rails (2) of a track and is fixable in the pivoted position and/or is braceable against the rails (2) at a predetermined force.

12. A device according to one or several of claims 8 to 11, **characterized in that** the pivoted bogies (17, 18) are designed in a resilient manner.

13. A device according to one or several of claims 1 to 12, **characterized in that** the road vehicle is actuatable via the front wheels which are coupled to a diesel engine (4) via a cardan shaft.

14. A device according to claim 13, **characterized in that** the road vehicle is equipped with an all-wheel drive, with the rear wheels being actuatable by means of a hydraulic drive.

15. A device according to one or several of claims 1 to 14, **characterized in that** the drive unit for the rail running gear (17, 18) is formed by a hydraulic or electric drive unit.

16. A device according to one or several of claims 1 to 15, **characterized in that** a tool spindle (12) supporting the metal-removing tool (13, 14) is fixable in a manner so as to be raisable and lowerable relative to the rail running gear (17, 18) and in a raised position.

17. A device according to claim 16, **characterized in that** the tool spindle (12) is adjustable horizontally relative to the rail running gear (17, 18).

18. A device according to claim 16 or 17, **characterized in that** the tool spindle (12) is pivotable about a swivelling axis that runs roughly vertically.

19. A device according to one or several of claims 1 to 18, **characterized in that**, for simultaneous machining of both rails (2) of a track, at least one metal-removing tool (13, 14) is provided on each side of the moveable device.

20. A device according to one or several of claims 1 to 19, **characterized in that** a tool changing device for changing the metal-removing tool is provided, which device comprises a tool changing crane (32) as well as preferably a tool magazine (33) and a tool holding fixture.

21. A device according to one or several of claims 1 to 20, **characterized in that** a copying shoe (24) which can be pressed against the rail is provided for the metal-removing tool (13, 14), which copying shoe is coupled to a tool feeding device.

22. A device according to one or several of claims 1 to 21, **characterized in that** milling tools (13) and/or grinding tools (14) are provided as metal-removing tools.

23. A device according to one or several of claims 1 to 22, **characterized in that** the actual profile of the rails (2) is ascertainable by means of a measuring device such as a probing head (T).

24. A device according to one or several of claims 1 to 23, **characterized in that** the machined rail section is ascertainable via a measuring device such as a probing head (T).

25. A device according to one or several of claims 1 to 24, **characterized in that** at least two tool spindles (12) are provided for simultaneous machining of a rail (2) using at least two consecutively arranged tools such as, for example, a milling tool (13) and a grinding tool (14).

26. A device according to one or several of claims 1 to 25, **characterized in that** a chip and dust removal means is provided, comprising a suction means (30), suction lines and a chip container (31).

27. A device according to one or several of claims 1 to 26, **characterized in that**, for the purpose of moving backwards on the rails, a camera (34) coupled to a display provided in the road vehicle's driver's cab is arranged at the rear end of the road vehicle.

28. A device according to one or several of claims 1 to 27, **characterized in that** the passenger side of the road vehicle's driver's cab is designed as an operator's stand for travelling on the rails (2) and machining down the rails (2).

29. A device according to one or several of claims 1 to 28, **characterized in that** the metal-removing tool (13, 14) is supported between the bearing points of the bridge construction during the machining of the rail (2).

30. A device according to one or several of claims 1 to 29, **characterized in that** the road vehicle's drive unit supplies energy for the actuation of the rail running gear and energy for the actuation of the metal-removing tool (13, 14).

31. A process for converting a truck vehicle into a road vehicle according to one or several of claims 1 to 30, **characterized in that** a vehicle frame portion behind the front axle(s) (8) and in front of the rear axle(s) (9) is removed and said portion is replaced by at least two longitudinal side beams (26) forming a bridge construction, which are directly or indirectly supported on the front vehicle frame portion (27) and the rear vehicle frame portion (28) which support the front and rear axle(s) (8, 9), respectively.

32. A process according to claim 31, **characterized in that** the longitudinal side beams (26) are intercomiected by a reinforcement (29).

## Revendications

1. Dispositif mobile pour l'usinage par enlèvement de copeaux d'au moins le niveau praticable (1) de rails posés (2), notamment de rails ferroviaires, le dispositif comportant au moins un outil d'enlèvement de copeaux (13, 14) pouvant être relevé et abaissé sur les rails (2) et étant équipé d'un mécanisme de roulement ferroviaire (17, 18) pouvant se déplacer le long des rails (2), le dispositif mobile étant conçu en tant que véhicule routier avec un mécanisme de roulement routier (10, 11) et le mécanisme de roulement ferroviaire (17, 18) pouvant être relevé et abaissé par rapport au mécanisme de roulement routier (10, 11) et étant équipé d'un entraînement, **caractérisé en ce que** le véhicule routier comporte une structure en pont (25) en tant qu'ossature porteuse pour l'outil d'enlévement de copeaux (13, 14), un élément (26) central, portant l'outil d'enlèvement de copeaux (13, 14) de la structure en pont (25) saillant en hauteur par-dessus des éléments d'extrémité antérieurs et postérieurs (27, 28) de la structure en pont (25) qui portent le mécanisme de roulement routier et ferroviaire (10, 11 17, 18).

2. Dispositif selon la revendication 1, **caractérisé en ce que** le véhicule routier comporte un mécanisme de roulement routier (10, 11) avec double essieu avant et arrière (8, 9).

3. Dispositif selon la revendication 2, **caractérisé en ce que** la charge maximale par essieu du mécanisme de roulement routier est de 10 t.

4. Dispositif selon l'une quelconque ou plusieurs des revendications 1 à 3, **caractérisé en ce que** le véhicule routier comporte un châssis (26, 27, 28) qui entre l'extrémité antérieure et l'extrémité postérieure comporte la structure en pont (25) rehaussée au-dessus d'un mécanisme de roulement de camion normal.

5. Dispositif selon la revendication 4, **caractérisé en ce que** la structure en pont (25) est formée par au moins deux longerons (26) latéralement disposés dans le véhicule routier, dont chacun est monté sur les éléments de châssis (27, 28) portant le double essieu antérieur et postérieur (8, 9).

6. Dispositif selon la revendication 4 ou 5, **caractérisé en ce que** la structure en pont (25) est munie d'un renfort (29) pour augmenter la rigidité à la torsion autour d'un axe situé en direction longitudinale du véhicule routier.

7. Dispositif selon la revendication 6, **caractérisé en ce que** le renfort (29) est formé de béton, de préférence d'un bloc en béton reliant les longerons (26) de la structure en pont (25).

8. Dispositif selon l'une quelconque ou plusieurs des revendications 1 à 7, **caractérisé en ce que** le mécanisme de roulement ferroviaire comporte trois boggies (17, 18) dont l'un (17) est disposé à l'avant de l'outil d'enlèvement de copeaux (13, 14) et l'autre (18) est disposé à l'arrière de l'outil d'enlèvement de copeaux (13, 14) dans le sens de déplacement du véhicule routier.

9. Dispositif selon la revendication 8, **caractérisé en ce qu'**un boggie (17) est disposé tout juste derrière le double essieu antérieur (8) et un boggie (18) est disposé tout juste derrière le double essieu postérieur (9) du mécanisme de roulement routier (9, 10).

10. Dispositif selon la revendication 8 ou 9, **caractérisé en ce qu'**au moins un boggie (18), de préférence le boggie postérieur (18) peut pivoter de 90° autour d'un axe vertical (19).

11. Dispositif selon l'une quelconque des revendications 8 à 10, **caractérisé en ce que** le boggie antérieur (17) peut être pivoté à l'encontre de la direction de déplacement pour la contrainte du boggie (17) entre les rails (2) d'une voie ferrée et **en ce qu'**il peut être fixé dans la position pivotée et/ou précontraint avec une force prédéfinie contre le rail (2) .

12. Dispositif selon l'une quelconque des revendications 8 à 11, **caractérisé en ce que** les boggies (17, 18) sont conçus de façon élastique.

13. Dispositif selon 1'une quelconque ou plusieurs des revendications 1 à 12, **caractérisé en ce que** le véhicule routier peut être entraîné par l'intermédiaire des roues avant, qui sont couplées à un moteur diesel (4) par l'intermédiaire d'un arbre à Cardan.

14. Dispositif selon la revendication 13, **caractérisé en ce que** le véhicule routier est équipé d'une traction intégrale, les roues arrière pouvant être entra5nées au moyen d'un entraînement hydraulique.

15. Dispositif selon l'une quelconque ou plusieurs des revendications 1 à 14, **caractérisé en ce que** le groupe d'entraînement pour le mécanisme de roulement ferroviaire (17, 18) est formé par un groupe d'entraînement hydraulique ou électrique.

16. Dispositif selon l'une quelconque ou plusieurs des revendications 1 à 15, **caractérisé en ce qu'**une broche porte-outil (12) portant un outil d'enlèvement de copeaux (13, 14) peut être relevée et abaissée par rapport au mécanisme de roulement ferroviaire (17, 18) et fixée dans la position relevée.

17. Dispositif selon la revendication 16, **caractérisé en ce que** la broche porte-outil (12) est réglable à l'horizontale par rapport au mécanisme de roulement ferroviaire (17, 18).

18. Dispositif selon la revendication 16 ou 17, **caractérisé en ce que** la broche porte-outil (12) peut pivoter autour d'un axe de pivotement s'étendant approximativement à la verticale.

19. Dispositif selon l'une quelconque ou plusieurs des revendications 1 à 18, **caractérisé en ce que** pour le traitement simultané des deux rails (2) d'une voie ferrée, au moins un outil d'enlèvement de copeaux (13, 14) est prévu sur chaque côté du dispositif mobile.

20. Dispositif selon l'une quelconque ou plusieurs des revendications 1 à 19, **caractérisé en ce qu'**un dispositif changeur d'outil comportant une grue de changement d'outil (32), ainsi que de préférence un magasin d'outils (33) et un raccordement d'outil est prévu pour le changement de l'outil d'enlèvement de copeaux.

21. Dispositif selon l'une quelconque ou plusieurs des revendications 1 à 20, **caractérisé en ce qu'**un sabot de copie (24) pouvant être pressé contre le rail, qui est couplé à un dispositif de mise à disposition d'outils est prévu pour l'outil d'enlèvement de copeaux (13, 14).

22. Dispositif selon l'une quelconque ou plusieurs des revendications 1 à 21, **caractérisé en ce qu'**on a prévu des outils de fraisage (13) et ou des outils de rectification (14) en tant qu'outils d'enlèvement de copeaux.

23. Dispositif selon l'une quelconque ou plusieurs des revendications 1 à 22, **caractérisé en ce que** le profil réel des rails (2) peut être détecté au moyen d'un dispositif de mesure, comme un palpeur (T).

24. Dispositif selon l'une quelconque ou plusieurs des revendications 1 à 23, **caractérisé en ce que** le profil de rail usiné peut être détecté par l'intermédiaire d'un dispositif de mesure, comme un palpeur (T).

25. Dispositif selon l'une quelconque ou plusieurs des revendications 1 à 24, **caractérisé en ce que** pour le traitement simultané d'un rail (2) au moyen d'au moins deux outils disposés l'un derrière l'autre, comme par exemple au moyen d'un outil de fraisage (13) et d'un outil de rectification (14), on a prévu au moins deux broches porteoutils (12).

26. Dispositif selon l'une quelconque ou plusieurs des revendications 1 à 25, **caractérisé en ce qu'**on a prévu un dispositif d'évacuation des copeaux et de la poussière, comportant un dispositif d'aspiration (30), des conduites d'aspiration et un bac à copeaux (31).

27. Dispositif selon l'une quelconque ou plusieurs des revendications 1 à 26, **caractérisé en ce que** pour le retour en arrière sur les rails, une caméra (34) avec un écran prévu dans la cabine du conducteur du véhicule ferroviaire est prévue sur l'extrémité arrière du véhicule ferroviaire.

28. Dispositif selon l'une quelconque ou plusieurs des revendications 1 à 27, **caractérisé en ce que** le côté convoyeux de la cabine conducteur du véhicule routier est conçu en tant que poste de service pour la conduite sur les rails (2) et pour l'usinage par enlèvement de copeaux des rails (2).

29. Dispositif selon l'une quelconque ou plusieurs des revendications 1 à 28, **caractérisé en ce que** pendant l'usinage des rails (2), l'outil d'enlèvement de copeaux (13, 14) est soutenu sur les points d'appui de la structure en pont.

30. Dispositif selon l'une quelconque ou plusieurs des revendications 1 à 29, **caractérisé en ce que** le groupe d'entraînement du véhicule routier fournit de l'énergie pour l'entraînement du mécanisme de roulement ferroviaire et de l'énergie pour l'entraînement de l'outil d'enlèvement de copeaux (13, 14).

31. Dispositif de transformation d'un camion en un véhicule routier selon l'une quelconque ou plusieurs des revendications 1 à 30, **caractérisé en ce qu'**on retire un élément de châssis de véhicule derrière l'essieu avant ou les essieux avant (8) et devant l'essieu arrière ou les essieux arrière (9) et on remplace cet élément par au moins deux longerons latéraux (26) formant une structure en pont, qui sont soutenus directement ou indirectement sur l'élément avant de châssis de véhicule (27) et sur l'élément arrière de châssis de véhicule (28), portant l'essieu (les essieux) avant ou arrière (8, 9).

32. Procédé selon la revendication 31, **caractérisé en ce que** les longerons latéraux (26) sont reliés entre eux par un renfort (29).
